**Europäisches Patentamt**

**European Patent Office**

**Office européen des brevets**

(11) Veröffentlichungsnummer : **0 110 124
B1**

(12) **EUROPÄISCHE PATENTSCHRIFT**

(45) Veröffentlichungstag der Patentschrift :
28.05.86

(51) Int. Cl.⁴ : **B 65 G 15/16, B 65 G 67/60**

(21) Anmeldenummer : **83110658.8**

(22) Anmeldetag : **25.10.83**

(54) Gurtförderanlage für Schüttgut.

Verbunden mit 83903505.2/0122282 (europäische Anmeldenummer/Veröffentlichungsnummer) durch Entscheidung vom 29.05.85.

(30) Priorität : **25.10.82 DE 3239452**

(43) Veröffentlichungstag der Anmeldung :
**13.06.84 Patentblatt 84/24**

(45) Bekanntmachung des Hinweises auf die Patenterteilung : **28.05.86 Patentblatt 86/22**

(84) Benannte Vertragsstaaten :
**AT BE CH DE FR GB IT LI NL SE**

(56) Entgegenhaltungen :
EP-A- 0 056 474
DE-A- 1 939 671
DE-A- 2 726 038
DE-C- 1 134 027
FR-A- 2 493 285

(73) Patentinhaber : **Conrad Scholtz AG
Am Stadtrand 55/59
D-2000 Hamburg 70 (DE)**

(72) Erfinder : **Höhne, Wolfram
Walter-Schmedemann-Strasse 28
D-2000 Hamburg 62 (DE)**

(74) Vertreter : **Lieck, Hans-Peter, Dipl.-Ing.
Lieck & Betten Patentanwälte Maximiliansplatz 10
D-8000 München 2 (DE)**

**Beschreibung**

Die Erfindung betrifft eine Gurtförderanlage für Schüttgut nach dem Oberbegriff des Anspruches 1.

Eine derartige Gurtförderanlage ist in Form einer Schiffsbe- und entladeanlage aus der DE-OS-3 102 731 bekannt. Hier ist das erste Traggerüst ein Ausleger, von dessen freiem Ende das zweite Traggerüst senkrecht in das zu be- oder entladende Schiff hinein herabhängt. Durch Schwenken des Auslegers um eine vom freien Ende entfernte Horizontalachse kann der Ausleger am freien Ende in seiner Höhe verstellt werden. Hierbei ändert sich je nach Stellung des Auslegers bzw. ersten Traggerüstes der Winkel zwischen den beiden Traggerüsten. Im Bereich beider Traggerüste ist ein einziger Fördergurt vorgesehen, dessen Fördertrum unter konvexer Ablenkung über die Umlenktrommel zwischen beiden Traggerüsten läuft, wobei der Umschlingungswinkel umso größer ist, je kleiner der Winkel zwischen den beiden Traggerüsten ist. Durch die Verwendung des einen, durchgehenden Fördergurtes statt je eines separaten Fördergurtes im ersten und im zweiten Traggerüst wird eine Übergabestelle für das Schüttgut zwischen zwei Fördergurten vermieden. Es tritt jedoch insbesondere bei höheren Fördergurt-Geschwindigkeiten von z. B. 3 m/s und mehr das Problem auf, daß das geförderte Schüttgut der Umlenkung des Fördergurt-Fördertrums an der Umlenktrommel nicht folgt, sondern durch Fliehkraftwirkung ausgestreut wird. Durch Wahl eines großen Radius für die Umlenktrommel läßt sich die Fliehkraftwirkung reduzieren. Doch stößt man hier bald aus Platz- und Gewichtsgründen an eine konstruktive Grenze.

Aus der FR-A-2 493 285 ist es bekannt, den Elevatorbechergurt eines Elevator-Senkrechtförderers im Bereich einer unteren Endtrommel des Elevatorbechergurtes mittels eines mitlaufenden Abdeckgurtes abzudecken. Hierbei ist jedoch der Winkel, mit welchem der Elevatorbechergurt seine Endtrommel umschlingt, unveränderlich. Der Abdeckgurt läuft über zwei stationäre Endtrommel die so am Umfang der Endtrommel für den Elevatorbechergurt angeordnet sind, daß der Abdeckgurt mit der gesamten Länge seines Vortrums bündig am Elevatorbechergurt anliegt.

Der Erfindung liegt die Aufgabe zugrunde, bei einer Gurtförderanlage der eingangs genannten Art, bei welcher der Fördergurt an der Umlenktrommel mit unterschiedlichem, von der jeweiligen Winkelstellung der Traggerüste abhängigem Winkel abgelenkt wird, die Schüttgut-Austreuung im Bereich der Umlenktrommel auch bei hohen Fördergurt-Geschwindigkeiten und/oder kleinen Umlenkradien zu vermeiden.

Diese Aufgabe wird erfindungsgemäß mit der im Anspruch 1 und bezüglich vorteilhafter Ausgestaltungen in den Unteransprüchen gekennzeichneten Gurtförderanlage gelöst.

Bei der erfindungsgemäßen Gurtförderanlage wird die Schüttgut-Austreuung an der Umlenktrommel durch den Abdeckgurt, welche den Förderraum des Fördergurt-Fördertrumes im Umschlingungsbereich der Umlenktrommel verschließt, sehr wirksam und dabei mit relativ geringem konstruktivem Aufwand vermieden. Außerdem ist die Anordnung — im Gegensatz zu denkbaren, gegenüber dem Fördergurt ortsfesten Abdeckeinrichtungen — sehr verschleißarm und sehr schonend für das Schüttgut. Schließlich erfüllt der mitlaufende Abdeckgurt seine Abdeckfunktion selbsttätig bei jeder gegenseitigen Winkelstellung der beiden Traggerüste, ohne daß es hier zu einer besonderen Nachstellung des Abdeckgurtes bedürfte.

Jeder Verschleiß aufgrund von Relativbewegung zwischen Fördergurt und Abdeckgurt in Längsrichtung derselben wird vermieden, weil der Abdeckgurt den Fördergurt jeweils nur im eigentlichen Umschlingungsbereich der Umlenktrommel berührt, was insbesondere dann wichtig ist, wenn der Fördergurt in bevorzugter Weise ein sogenannter Wellenkantengurt ist. Bei der Erfindung verläuft das Vortrum des Abdeckgurtes in jeder Winkelstellung der Traggerüste vor und hinter der Umlenktrommel immer unter einem spitzen Winkel zum Fördertrum des Fördergurtes und legt sich an diesen nur in dem Bereich an, in dem das Fördertrum die Umlenktrommel umschlingt. Hierzu ist im Falle eines Wellenkantengurtes als Fördergurt der Abstand zwischen Endtrommel-Mantel und Fördertrum natürlich zum Kopf der Wellenkante vorzusehen.

Eine besonders günstige und einfache Führung des Abdeckgurtes ergibt sich bei der Weiterbildung der erfindungsgemäßen Gurtförderanlage nach Anspruch 2. Damit die gemäß Anspruch 2 vorgesehene eine Ablenkeinrichtung für das Rücktrum des Abdeckgurtes nicht in einen unpraktisch großen Abstand von der Umlenktrommel angeordnet sein muß, um auch bei einem sehr kleinen Winkel zwischen den beiden Traggerüsten zu gewährleisten, daß das Rücktrum des Abdeckgurtes frei läuft, ist die Ablenkeinrichtung in besonders bevorzugter Weise gemäß Anspruch 3 gelagert, wobei eine zweckmäßige Ausbildungsform der zur Vorgabe der räumlichen Lage der Ablenkeinrichtung dienenden Nachstelleinrichtung aus Anspruch 4 und 5 hervorgeht.

Da sich der Umschlingungswinkel auch für den Abdeckgurt an der Umlenktrommel in Abhängigkeit von der gegenseitigen Winkelstellung der Traggerüste und damit die Wegstrecke für den Abdeckgurt ändert, kann eine Spanneinrichtung gemäß Anspruch 9 zum Längenausgleich vorgesehen sein.

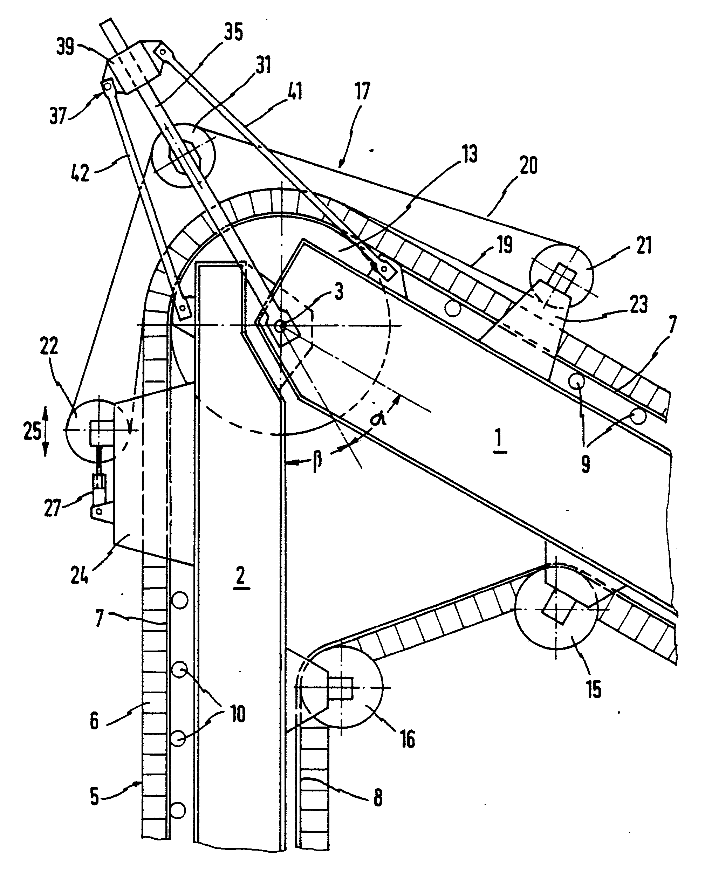

Im folgenden ist die Erfindung mit weiteren vorteilhaften Einzelheiten anhand eines schematisch dargestellten Ausführungsbeispieles näher erläutert. Die einzige Figur zeigt in Seitenansicht den Abschnitt einer Gurtförderanlage am Übergang zwischen zwei in ihrer gegenseitigen Winkelstellung veränderbaren Traggerüsten.

Gemäß der einzigen Figur umfaßt eine Gurtförderanlage für Schüttgut, bei der es sich z. B. um die aus der DE-OS-3 102 731 bekannte Schiffsbe- und entladeanlage handeln kann, als Ausleger ein erstes Traggerüst 1, von dessem freien Ende ein zweites Tragerüst 2 senkrecht herabhängt, das gegenüber dem ersten Traggerüst um eine horizontale Schwenkachse 3 schwenkbar ist. Das erste Traggerüst 1 ist mit hier nicht näher gezeigten Mitteln durch Schwenken um eine vom freien Ende entfernte Horizontalachse in seiner Höhe am -freien Ende verstellbar, wobei sich der Winkel zum stets senkrecht bleibenden zweiten Traggerüst ändert. Ein Fördergurt 5 mit seitlich aufgesetzten Wellenkanten 6 und — nicht gezeigten — querverlaufenden Mitnehmerleisten zwischen diesen, also ein sogenannter Wellenkantengurt, ist mit seinem Fördertrum 7 entlang dem ersten Traggerüst 1 und dem zweiten Traggerüst 2 geführt, wobei das Fördertrum über gerade Stützrollen 9 auf der Oberseite des ersten Traggerüstes 1 und gerade Stützrollen 10 an der Außenseite des zweiten Traggerüstes 2 läuft.

Am Übergang zwischen den beiden Traggerüsten 1 und 2 ist eine Umlenktrommel 13 vorgesehen, deren Drehachse mit der Schwenkachse 3 zusammenfällt und an welcher das Fördertrum 7 konvex abgelenkt wird.

Das Rücktrum 8 des Fördergurtes 5 ist an den einander zugewandten Seiten der beiden Traggerüste 1 und 2 geführt und erstreckt sich am Übergang zwischen den beiden Traggerüsten zwischen zwei an den beiden Traggerüsten gelagerten Umlenkrädern 15 und 16, an denen jeweils eine konkave Ablenkung des Rücktrums erfolgt.

Im Umschlingungsbereich der Umlenktrommel 13 ist dem Fördertrum 7 des Fördergurtes 5 ein als Flachgurt ausgebildeter Abdeckgurt 17 zugeordnet, der zwischen zwei Endtrommeln 21 und 22 und einer zusätzlichen Ablenktrommel 31 für sein Rücktrum 20 umläuft. Die Endtrommeln 21 und 22 sind an der Ober- bzw. Außenseite des Traggerüstes 1 bzw. 2 mit einem Abstand von der Schwenkachse 3 angeordnet. Hierzu sind an beiden Traggerüsten je zwei Lagerböcke 23 bzw. 24 für die Endtrommeln angebracht, die über das Fördertrum 7 soweit hinausstehen, daß der Endtrommel-Mantel vom Kopf der Wellenkante 6 einen geringen Abstand hat. Dieser Abstand ist in Relation zum Längsabstand der jeweiligen Endtrommel von der Schwenkachse 3 so bemessen, daß das Vortrum 19 des Abdeckgurtes 17 auf beiden Seiten der Umlenktrommel 13 unter einem spitzen Winkel zum Fördertrum 7 verläuft. Dadurch ist erreicht, daß der Abdeckgurt 17 bzw. sein Vortrum 19 das Fördertrum 7, und zwar genau gesagt den Kopf der Wellenkanten 6 des Fördertrums 7 nur im Bereich der Umschlingung der Umlenktrommel 13 berührt.

Damit der Abdeckgurt 17 in allen gegenseitigen Winkelstellungen der Traggerüste 1 und 2 gespannt bleibt, ist die Endtrommel 22 auf ihren Lagerböcken 24 am Traggerüst 2 in Längsrichtung des Traggerüstes verschiebbar gelagert, wie es durch den Doppelpfeil 25 angedeutet ist, und wird mittels eines Hydraulikzylinders 27 mit einer konstanten Vorspannkraft beaufschlagt.

Die dem Rücktrum 20 des Abdeckgurtes 17 zugeordnete Ablenktrommel 31 ist im Umschlingungsbereich der Umlenktrommel 13 angeordnet. Sie ist dazu an jedem ihrer beiden Enden jeweils an einem Schwenkarm 35 gelagert, der um die Schwenk- bzw. Drehachse 3 schwenkbar ist. Ein mit den beiden Traggerüsten 1 und 2 verbundenes Gestänge 37 hält den Schwenkarm 35 in einer Winkelstellung, bei welcher das Verhältnis der beiden zwischen dem Schwenkarm·35 und den beiden Gerüsten 1 und 2 eingeschlossenen Winkel α und β unabhängig von der gegenseitigen Winkelstellung der Traggerüste 1 und 2 konstant bleibt, sich also die beiden Winkel α und β bei einer Veränderung der gegenseitigen Winkelstellung der Traggerüste 1 und 2 im gleichen prozentualen Maße ändern.

Das Gestänge 37 umfaßt ein Kupplungsstück 39, das an einem über die Ablenktrommel 31 hinausstehenden Abschnitt des Schwenkarmes 35 in dessen Längsrichtung verschiebbar gelagert ist, sowie zwei Gelenkstangen 41 und 42, die beide einerseits am Kupplungsstück 39 und andererseits jeweils am Traggerüst 1 bzw. Traggerüst 2 angelenkt sind.

Der Abdeckgurt 17 hat keinen eigenen Antrieb, sondern wird durch Reibungsschluß vom Fördergurt 5 angetrieben.

Beim erläuterten Ausführungsbeispiel, das die bevorzugte Ausführungsform der Erfindung darstellt, ist das Gestänge 37 so bemessen, daß die Winkel α und β in etwa gleich groß sind, mit anderen Worten die Achse der Ablenktrommel (31) stets ungefähr durch die Winkelhalbierende des von den beiden Traggerüsten 1 und 2 eingeschlossenen Winkels geht.

**Patentansprüche**

1. Gurtförderanlage für Schüttgut mit einem ersten Traggerüst (1), an dessen einem Ende um eine horizontale Schwenkachse (3) schwenkbar ein zweites Traggerüst (2) angelenkt ist, und mit einem Fördergurt (5), dessen Fördertrum (7) entlang dem ersten und dem Zweiten Traggerüst (1 ; 2) und über eine Umlenkstation zwischen den Traggerüsten (1 ; 2) geführt ist, welche eine Umlenktrommel (13) für das Fördertrum (7) aufweist, deren Drehachse mit der Schwenkachse (3) zusammenfällt, dadurch gekennzeichnet, daß die Umlenkstation einen dem Fördertrum (7) des Fördergurtes (5) im Umschlingungsbereich der Umlenktrommel (13) zugeordneten, mit dem Fördergurt mitlaufenden Abdeckgurt (17) umfaßt, der über zwei Endtrommeln (21, 22) läuft, von denen die eine am ersten und die andere am zweiten Traggerüst (1, 2) jeweils über dem Fördertrum (7) des Fördergurtes (5) unter einem Abstand zwischen Endtrommel-Mantel und Fördertrum angeordnet ist.

2. Gurtförderanlage nach Anspruch 1, dadurch gekennzeichnet, daß eine Ablenkeinrichtung (31) für das Rücktrum (20) des Abdeckgurtes (17) im Umschlingungsbereich der Umlenktrommel (13) angeordnet ist.

3. Gurtförderanlage nach Anspruch 2, dadurch gekennzeichnet, daß die Ablenkeinrichtung (31) mit Abstand von der Umlenktrommel (13) an mindestens einem um die Schwenk- bzw. Drehachse (3) schwenkbaren Schwenkarm (35) gelagert ist, und daß dem Schwenkarm (35) eine selbsttätige Nachstelleinrichtung (37) zugeordnet ist, welche den Schwenkarm (35) in einer Winkelstellung hält, bei welcher die beiden zwischen dem Schwenkarm (35) und den beiden Traggerüsten (1, 2) eingeschlossenen Winkel in einem konstanten, von der gegenseitigen Winkelstellung der Traggerüste (1, 2) unabhängigen Verhältnis von vorzugsweise 1 : 1 zueinander stehen.

4. Gurtförderanlage nach Anspruch 3, dadurch gekennzeichnet, daß die Nachstelleinrichtung durch ein mit beiden Traggerüsten (1, 2) verbundenes Gestänge gebildet ist.

5. Gurtförderanlage nach Anspruch 4, dadurch gekennzeichnet, daß das Gestänge (37) ein am Schwenkarm (35) in dessen Längsrichtung verschiebbares Kupplungsstück (39) und zwei Gelenkstangen (41, 42) unfaßt, die beide am Kupplungsstück (39) und je an einem Traggerüst (1, 2) angelenkt sind.

6. Gurtförderanlage nach einem der Ansprüche 1 bis 5, dadurch gekennzeichnet, daß der Fördergurt (5) ein Wellenkantengurt ist.

7. Gurtförderanlage nach einem der Ansprüche 1 bis 6, dadurch gekennzeichnet, daß der Abdeckgurt (17) ein Flachgurt ist.

8. Gurtförderanlage nach einem der Ansprüche 1 bis 7, dadurch gekennzeichnet, daß der Abdeckgurt (17) durch Reibungschluß vom Fördergurt (5) angetrieben wird.

9. Gurtförderanlage nach einem der Ansprüche 1 bis 8, dadurch gekennzeichnet, daß eine der beiden Endtrommeln (21 ; 22) in Längsrichtung des zugeordneten Traggerüstes (2) verschiebbar gelagert und mit einer konstanten Vorspannkraft beaufschlagt ist.

## Claims

1. Belt conveyor plant for bulk material, comprising a first support frame (1) one extremity of which has a second support frame (2) pivotally articulated on it around a horizontal pivot axis (3), and a conveyor belt (5) whose conveyor section (7) is led along the first and second support frames (1 ; 2) and over a deflector station between the support frames (1 ; 2) which comprises a deflector drum (13) for the conveyor section (7), whose axis of rotation coincides with the pivot axis (3), characterised in that the deflector station incorporates a covering belt (17) co-entrained with the conveyor belt and allocated to the conveyor section (7) of the conveyor belt (5) in the area of enflankment of the deflector drum (13) and which runs over two end drums (21, 22) of which one is situated on the first support frame and the other on the second of the support frames (1, 2) above the conveyor section (7) of the conveyor belt (5) in each case, with a spacing between the terminal drum jacket and the conveyor section.

2. Belt conveyor plant according to claim 1, characterised in that a deflector system (31) for the return section or leg (20) of the covering belt (17) is situated in the area of enflankment of the deflector drum (13).

3. Belt conveyor plant according to claim 2, characterised in that the deflector system (31) is installed with spacing from the deflector drum (13) on at least one swinging lever (35) pivotable around the pivoting or rotational axis (3), and that the swinging lever (35) has allocated to it an automatic take-up system (37) which holds the swinging lever (35) at an angular position at which the two angles subtended between the swinging lever (35) and the two support frames (1, 2) have a constant ratio between them which preferably amounts to 1 : 1 and is unaffected by the reciprocal angular position of the support frames (1, 2).

4. Belt conveyor plant according to claim 3, characterised in that the take-up system is formed by a linkage connected to both support frames (1, 2).

5. Belt conveyor plant according to claim 4, characterised in that the linkage (37) incorporates a coupling member (39) displaceable on the swinging lever (35) in its longitudinal direction, and two link rods (41, 42) which are both articulated on the coupling member (39) and to one support frame (1, 2) in each case.

6. Belt conveyor plant according to one of the claims 1 to 5, characterised in that the conveyor belt (5) is a belt having undulant edges.

7. Belt conveyor plant according to one of the claims 1 to 6, characterised in that the covering belt (17) is a flat belt.

8. Belt conveyor plant according to one of the claims 1 to 7, characterised in that the covering belt (17) is driven by the conveyor belt (5) by frictional engagement.

9. Belt conveyor plant according to one of the claims 1 to 8, characterised in that one of the two end drums (21 ; 22) is displaceably mounted in the longitudinal direction of the associated support frame (2) and is acted upon by a constant preloading force.

## Revendications

1. Agencement de convoyeur à bande pour matière en vrac qui comprend une première ossature de support (1), à l'une des extrémités de laquelle s'articule, de manière à pouvoir tourner autour d'un axe de pivotement horizontal (3), une deuxième ossature de support (2), et une courroie transporteuse (5) dont le brin de transport (7) est guidé le long de la première et de la deuxième ossature de support (1 ; 2) et sur un dispositif de changement de direction placé entre les ossatures de support (1 ; 2) et qui comporte, pour le brin de transport (7), un tambour de changement de direction (13) dont l'axe de rotation coïncide avec l'axe de pivotement (3), caractérisé en ce que le dispositif de changement de direction comprend une courroie couvrante (17) qui, dans la zone d'enroulement du tambour de changement de direction (13) est associée au brin de transport (7) de la courroie transporteuse (5) et suit le mouvement de la courroie transporteuse et qui passe sur deux tambours d'extrémité (21 ; 22) qui sont montés l'un sur la première, l'autre sur la deuxième ossature de support (1 ; 2) au-dessus du brin de transport (7) de la courroie transporteuse (5) de manière qu'il y ait une certaine distance entre l'enveloppe des tambours d'extrémité et le brin de transport.

2. Agencement de convoyeur à bande selon la revendication 1, caractérisé en ce que un dispositif de déviation (31) du brin de retour (20) de la courroie couvrante (17) est monté dans la zone d'enroulement du tambour de renvoi (13).

3. Agencement de convoyeur à bande selon la revendication 2, caractérisé en ce que le dispositif de déviation (31) est monté sur palier à une certaine distance du tambour de changement de direction (13), sur au moins un bras pivotant (35) pouvant tourner autour de l'axe de pivotement ou de rotation (3) et en ce qu'au bras de pivotement (35) correspond un dispositif automatique de réglage (37) qui maintient le bras pivotant (35) dans une position angulaire pour laquelle les deux angles inclus entre le bras de pivotement (35) et les deux ossatures de support (1 ; 2) sont dans un rapport constant égal de préférence à 1 : 1 et indépendant de la position angulaire relative des ossatures de support (1 ; 2).

4. Agencement de convoyeur à bande selon la revendication 3, caractérisé en ce que le dispositif de réglage est constitué par un système de barres relié aux deux ossatures de support (1 ; 2).

5. Agencement de convoyeur à bande selon la revendication 4, caractérisé en ce que le système de barres (37) comprend une pièce d'accouplement (39) qui peut se déplacer sur le bras pivotant (35) dans le sens de sa longueur et deux barres articulées (41, 42) qui s'articulent toutes deux sur la pièce d'accouplement (39) et dont chacune s'articule sur une ossature de support (1 ; 2).

6. Agencement de convoyeur à bande selon l'une des revendications 1 à 5, caractérisé en ce que la courroie transporteuse (5) est une courroie à bords ondulés.

7. Agencement de convoyeur à bande selon l'une des revendications 1 à 6, caractérisé en ce que la courroie couvrante (17) est une courroie plate.

8. Agencement de convoyeur à bande selon l'une des revendications 1 à 7, caractérisé en ce que la courroie couvrante (17) est entraînée par friction par la courroie transporteuse (5).

9. Agencement de convoyeur à bande selon l'une des revendications 1 à 8, caractérisé en ce que l'un des deux tambours d'extrémité (21 ; 22) est monté sur paliers de manière à pouvoir se déplacer dans le sens de la longueur de l'ossature de support (2) correspondante et est soumis à une force de précontrainte constante.